# DEMANDE DE BREVET EUROPEEN

(11) **EP 1 842 427 A1**
(43) Date de publication de la demande: **10.10.2007**
(21) Numéro de dépôt: 07290359.4
(22) Date de dépôt: 23.03.2007
(51) Int. Cl.: A22C 17/00, A22C 25/16

(54) **Procede et installation de separation de morceaux de chair cuite comprenant des os et/ou du cartilage et chair cuite obtenue**

(30) Priorité: 03.04.2006 FR 0602854
(71) Demandeur: PROTIAL, 49071 Beaucouze (FR)
(72) Inventeur: Martin, Sébastien, 49000 Angers (FR); De Martrin, Patrice, 49100 Angers (FR)
(74) Mandataire: Laget, Jean-Loup

(57) **Abrégé**

L'invention se rapporte à un procédé et installation de séparation de morceaux de chair d'animaux marins ou terrestres comportant des os et/ou du cartilage.

Le procédé est caractérisé en ce qu'il comprend une étape de cuisson des morceaux de chair d'animaux marins ou terrestres, suivie immédiatement d'au moins un traitement physique consistant à projeter, généralement par pulvérisation, au moins un fluide, sous pression, sur les morceaux de chair cuite de façon à séparer la chair des os ou du cartilage, la température du fluide du traitement étant au moins égale à 50° C.

## Description

L'invention concerne un procédé et une installation de séparation de morceaux de chair comportant des os et/ou du cartilage ainsi que de la chair cuite obtenue par mise en oeuvre du procédé.

La plupart des procédés connus jusqu'ici pour séparer la viande des morceaux d'os ou de cartilage se rapportent à des morceaux de viande crue. La séparation s'opère généralement mécaniquement. Cette technique met en oeuvre un équipement spécifique qui consiste à presser les morceaux sur un tamis muni de fines perforations, le pressage s'opérant soit par l'intermédiaire d'une bande, soit par l'intermédiaire d'une vis sans fin ; les viandes passent à travers le tamis tandis que les os et cartilages sont retenus puis évacués. Ce procédé a pour inconvénient de casser les parties osseuses fragiles et de conduire à des pulpes de viande de granulométrie très fine (les fibres de viandes sont déstructurées) qui contiennent de nombreuses impuretés, telles que particules osseuses, petits fragments de cartilages, de tendons, de périoste, de moëlle... générant des mauvais goûts. Pour les viandes cuites, le désossage manuel est également envisagé. Cette méthode manuelle est toutefois longue et fastidieuse, surtout quand il s'agit de récupérer des viandes sur des petits morceaux, tels que cou de volaille, vertèbres d'animaux de boucherie, arêtes de poisson, etc.

On connaît à travers le document US 4 217 679 un procédé de séparation de la viande d'os par projection d'un flux d'eau froide à une température comprise entre 0 et 20° C, la nature (cuite ou crue) des morceaux de viande n'étant pas précisée. La projection d'un flux de fluide froid génère un certain nombre d'inconvénients. On constate ainsi un risque de solidification ou de figeage des matières grasses contenues dans les morceaux de chair à séparer. Par ailleurs, à de telles températures, la chair de viande tend à se raffermir ou se rétracter. Enfin, l'absence de contamination bactérienne ne peut être garantie. Ces mêmes inconvénients sont présents dans les procédés décrits dans les brevets US 3 671 999, DE 3 516 082. Dans le document US 3 089 775, les pièces à traiter sont réfrigérées ou congelées et un flux de particules de glace est projeté. Enfin, le document FR 2 134 017 décrit un procédé de séparation complexe mettant en oeuvre des enzymes protéolytiques.

Aussi, il subsiste le besoin de disposer d'un procédé simple pour séparer rapidement et facilement la totalité de la viande présente sur des morceaux de chair cuite comportant encore des os et/ou du cartilage sans créer de petits morceaux d'os et/ou de cartilage susceptibles de se retrouver avec la viande désossée tout en limitant les risques de contamination bactérienne.

Un autre but de la présente invention est de proposer un procédé de séparation du type précité dont les étapes permettent, du fait d'un traitement continu à chaud, d'éviter la survenue de phénomènes, tels qu'une solidification ou un figeage des matières grasses de chairs traitées, un raffermissement ou une rétractation de la chair tels qu'observés dans l'état de la technique.
L'invention a donc pour objet un procédé de séparation de morceaux de chair d'animaux marins ou terrestres comportant des os et/ou du cartilage, caractérisé en ce qu'il comprend, une étape de cuisson des morceaux de chair d'animaux marins ou terrestres, suivie immédiatement d'au moins un traitement physique consistant à projeter, généralement par pulvérisation, au moins un fluide, sous pression, sur les morceaux de chair cuite de façon à séparer la chair des os ou du cartilage, la température du fluide du traitement étant au moins égale à 50° C.

Le procédé selon l'invention présente l'avantage de pouvoir effectuer la séparation de la viande encore fixée à des os, par exemple, sans que de fines particules d'os restent dans la viande désossée, empêchant ainsi sa valorisation optimale ultérieure, notamment par la présence en quantité trop élevée de calcium.

Le procédé de l'invention, opérant un désossage par voie hydrodynamique, présente encore l'avantage de permettre la séparation parfaite de morceaux de chair cuite présentant toutes les dimensions (de très gros morceaux ainsi que de très petits), et notamment de certains petits morceaux comportant parfois plus d'os ou de cartilage que de chair, ou encore des morceaux de chair de viande de volaille par exemple, dont les os sont particulièrement fragiles.

Par conséquent, par un traitement non destructeur des morceaux de chair cuite, le procédé de l'invention empêche de retrouver dans la chair isolée toute trace d'os, et par conséquent de moëlle osseuse puisque les os (même les plus petits) ne sont ni cassés, ni broyés à l'issue du traitement. Ils sont simplement séparés des fibres de viande.
Le procédé de l'invention peut être appliqué facilement et rapidement aussi bien sur des morceaux de chair de gros animaux, tels que le boeuf, le veau, l'agneau, le porc dont l'adhérence de la chair cuite est encore élevée sur les os, que sur des morceaux de chair de volaille dont les os très fragiles se cassent ou se broient très facilement, ou encore sur des morceaux de chair de tout type d'animaux marins, tels que les poissons dont la chair comprend beaucoup de petites arêtes susceptibles de se retrouver mélangées à la viande une fois séparée du squelette de l'animal, ou enfin sur des poissons à chair plus serrée et dense et donc plus liée aux os du squelette.

Le procédé permet de limiter les risques de contamination bactérienne pendant l'étape de séparation, de réduire, voire supprimer, les phénomènes de solidification des matières grasses ou de rétractation des chairs, observés dans l'état de la technique sans augmenter de manière importante la consommation d'énergie du fait d'une absence de refroidissement des morceaux traités entre l'étape de cuisson et l'étape de séparation, l'étape de séparation suivant immédiatemment l'étape de cuisson.

Selon un mode de mise en oeuvre préféré du procédé, la température du fluide du traitement physique est comprise de préférence entre 60° et 80°C, en vue d'un traitement continu à chaud.

La mise en oeuvre du procédé de séparation à des températures élevées (aux environs de 70°C) permet de donner une garantie bactériologique sur la chair désossée.

La pression du fluide du traitement physique dans le circuit d'alimentation des organes de projection de fluide est comprise entre 4 et 100 bars, de préférence comprise entre 6 et 50 bars.

Le fluide peut être choisi parmi des liquides tels que l'eau, des liquides aqueux, des huiles végétales, des graisses animales et leurs mélanges.

Le procédé consiste, pour l'optimisation du traitement physique, à disposer les morceaux de chair cuite à la surface d'un support ajouré et à orienter le flux de fluide projeté vers la surface dudit support suivant une direction, de préférence sensiblement orthogonale audit support, de manière telle que le flux de fluide provoque à la fois le détachement de la chair d'avec les os et/ou le cartilage et l'entraînement de la chair à travers les ajours dudit support.

L'invention a encore pour objet une installation destinée à mettre en oeuvre le procédé précité caractérisée en ce qu'elle comprend, disposés immédiatement en aval de moyens de cuisson des morceaux de chair à séparer, au moins :
- un support, généralement plan, ajouré de réception des morceaux de chair cuite à traiter,
- des organes, tels que buse, de projection d'un fluide gazeux ou liquide en direction dudit support,
- des moyens de collecte positionnés sous ledit support, ces moyens étant aptes à récupérer la chair, séparée d'avec les os et/ou le cartilage sous l'action du fluide, et forcée à traverser ledit support sous l'action de ce même fluide.

Selon une forme de réalisation préférée de l'installation, ladite installation comporte en outre des moyens de récupération du fluide liquide de désossage généralement chargé en graisse, ces moyens de récupération étant positionnés sous les moyens de collecte de la chair. Dans ce cas, elle peut avantageusement comporter également une unité de traitement du fluide liquide de désossage reliée en entrée aux moyens de récupération du fluide liquide de désossage et raccordée en sortie aux organes, tels que buses, de projection du fluide liquide en vue de permettre un recyclage du fluide liquide de désossage.
Généralement, il est alors prévu, sur le circuit de circulation de fluide, entre moyens de récupération du fluide liquide de désossage et organes de projection de fluide liquide, des moyens de pompage du fluide liquide et des moyens de chauffage dudit fluide.
Le support de réception des morceaux de chair cuite à traiter est un support mobile ajouré, tel qu'un tapis convoyeur, équipé d'orifices de séparation de la chair d'avec les os et/ou les cartilages, ce support décrivant une trajectoire prédéterminée entre une zone d'alimentation en morceaux du support et une zone d'évacuation des os et des cartilages, ladite zone d'évacuation étant pourvue d'un bac de récupération des os et cartilages.
Les moyens de collecte de la chair se présentent quant à eux sous forme d'une surface ajourée mobile le long d'une trajectoire prédéterminée, ces moyens de collecte pouvant être disposés en série avec une unité de pressage dans laquelle la chair désossée, issue des moyens de collecte, est directement évacuée. L'opération de pressage a pour objectif de réduire la teneur en eau ou en matières grasses des chairs séparées.

L'invention a encore pour objet de la chair cuite d'animaux marins ou terrestres exempte d'os et/ou de cartilages, apte à constituer un produit intermédiaire ou fini, caractérisée en ce que ladite chair est obtenue par mise en oeuvre d'un procédé du type précité.

Le produit issu de ce procédé conservant une texture fibrée caractéristique de celle des viandes et ne contenant pas d'impuretés (particules d'os, de cartilages, de tendons, de périoste, de moëlle, etc.) peut être utilisé plus facilement que les produits issus de séparation mécanique ou de séparation à froid pour la préparation de produits agroalimentaires élaborés précuits incorporant des viandes (rillettes, aides culinaires fibrées, farces, portions à griller, croquettes, saucisses, ...).

Le produit issu de ce procédé présente en outre l'intérêt d'apparaître de couleur plus blanche que d'autres viandes désossées classiquement du fait de la séparation de la chair effectuée avec un liquide chaud, tel que l'eau chaude, et donc de pouvoir être incorporé directement dans la préparation de produits élaborés précuits de viande.
L'invention sera bien comprise à la lecture de la description suivante d'exemples de réalisation, en référence aux dessins annexés dans lesquels :
- la figure 1 représente une vue schématique, en coupe, d'une installation conforme à l'invention et
- la figure 2 représente une vue schématique en coupe d'une variante de l'installation représentée à la figure 1.

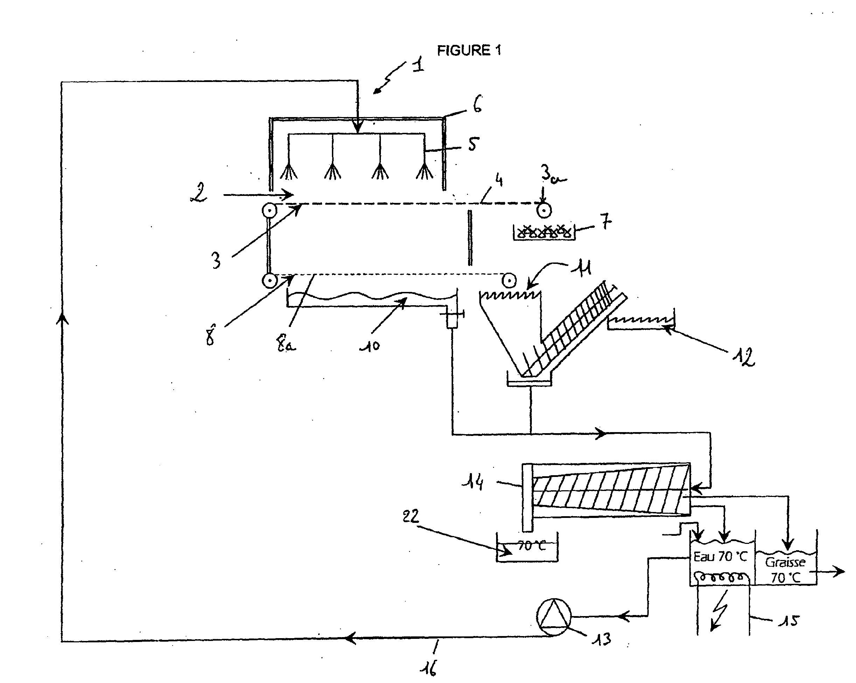

Comme on peut le voir sur la figure 1, l'installation de référence générale 1 comprend une zone 2 de chargement en morceaux de chair cuite d'animaux encore chauds comprenant des os et/ou du cartilage. Ces morceaux issus des moyens de cuisson sont reçus sur un support 3, constitué par un tapis convoyeur des chairs à séparer, ce tapis comprenant une grille équipée d'orifices 4 d'une dimension de 1 à 10 mm et de forme ronde, rectangulaire ou autre, le choix de la géométrie des mailles étant fonction du type de viande et de l'espèce concernée. Ce tapis constitue le support 3 de réception des chairs cuites encore chaudes à traiter.

A l'aplomb et au-dessus de ce support 3 mobile, l'installation comporte des buses 5 d'arrivée d'un fluide liquide chaud (température voisine de 70°C) qui est pulvérisé sous une pression allant de 4 à 100 bars et de préférence comprise entre 6 et 50 bars. Un couvercle 6 entoure les buses 5 évitant ainsi toute projection de fluide liquide. Le flux de fluide projeté est de préférence orienté suivant une direction sensiblement orthogonale à la direction de déplacement du support 3 mobile en formant avec cette dernière un angle optimisé compris entre 70° et 110°. Le flux de fluide heurte ainsi le support 3 mobile suivant une direction qui facilite le passage des chairs à séparer à travers les ouvertures dudit support.

Un bac 7 de récupération des os et du cartilage est disposé à l'extrémité 3a du convoyeur.

L'installation comprend en outre un second convoyeur 8 muni d'ajours destiné à acheminer les chairs désossées vers un deuxième bac 9 de récupération ou vers une unité 11 de pressage à la sortie de laquelle les chairs 12 pressées sont récupérées. Ce convoyeur 8 forme les moyens de collecte de l'installation positionnés sous le support 3. Ces moyens 8 sont aptes à récupérer la chair séparée d'avec les os et les cartilages. Ils sont ajourés pour permettre l'évacuation du fluide. Un troisième bac de récupération 10 du fluide liquide de désossage est disposé à l'aplomb du second convoyeur 8. Généralement, l'installation comporte en outre une unité 14 de traitement du fluide liquide de désossage reliée en entrée aux moyens 10 de récupération du fluide liquide de désossage et raccordée en sortie aux organes 5, tels que buses, de projection du fluide liquide en vue de permettre un recyclage du fluide de désossage.

Il est également prévu, sur le circuit de circulation de fluide, entre moyens 10 de récupération du fluide de désossage et organes 5 de projection de fluide, des moyens 13 de pompage du fluide et, si nécessaire, des moyens 15 de chauffage dudit fluide.

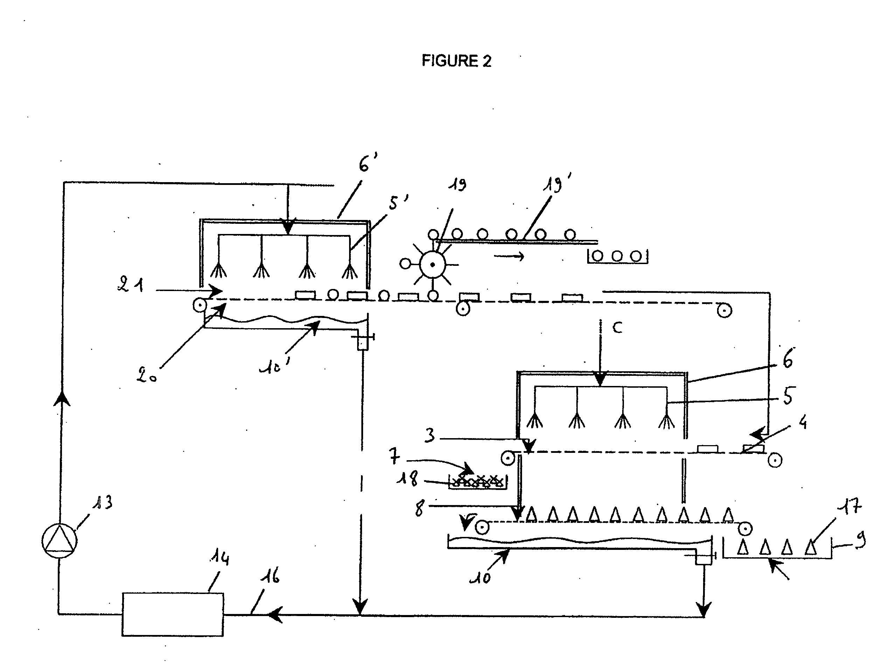

Comme l'illustre la figure 2, l'installation peut en outre comprendre un dispositif, par exemple un système 19 rotatif muni d'aiguilles souples, permettant de piquer en cours de traitement les morceaux de viande les plus grossiers (sans os et sans cartilage) et de les déplacer vers un autre tapis convoyeur 19', de manière à séparer correctement les gros morceaux des fines particules de viandes. Dans ce cas, une seconde installation du type de celle décrite à la figure 1 permet de séparer dans un deuxième temps les fines particules des os et/ou des cartilages. Dans l'installation représentée à la figure 2, les morceaux de chair à désosser sont introduits en 21 dans l'installation et sont disposés à la surface d'un convoyeur ajouré. Ce convoyeur 20 est surmonté d'organes 5' de projection de fluide liquide protégés par un couvercle 6'. Le convoyeur 20 est par ailleurs positionné à l'aplomb d'un bac 10' servant à la collecte du fluide liquide projeté. Le système 19 rotatif muni d'aiguilles souples agit au niveau des morceaux de viande les plus grossiers disposés à la surface de ce convoyeur 20 pour les extraire de ladite installation. Les morceaux restants sont quant à eux amenés dans une installation selon la figure 1 comportant un support 3 mobile ajouré de type convoyeur surmonté à nouveau d'une pluralité d'organes 5, tels que des buses de projection de fluide. Un désossage est donc à nouveau opéré pour permettre d'une part la récupération d'os 18 et de cartilages, d'autre part de viande 17 cuite désossée fibrée. Le liquide de traitement est quant à lui recyclé à l'aide d'une unité 14 de traitement positionnée sur une conduite 16 de circulation de fluide reliant les bacs 10, 10' de collecte de fluide liquide aux organes 5, 5' de pulvérisation de fluide liquide. Il en résulte une économie en fluide de désossage. Des fines particules de viande 22 sont à nouveau collectées en sortie de l'unité de traitement.

L'installation destinée à mettre en oeuvre le procédé de séparation fonctionne de la manière suivante.

Dans la zone 2 de chargement, une goulotte de chargement en morceaux de chair cuite comprenant des os ou du cartilage charge le support 3 mobile de type convoyeur qui achemine les chairs sous les buses 5. Les buses pulvérisent de manière continue un fluide liquide chaud (température voisine de 70°C) et sous une pression de préférence comprise entre 20 et 50 bars. Au contact du fluide liquide sous pression, la viande se détache des os et du cartilage. La viande passe au travers des orifices 4 du support 3 de type convoyeur et tombe sur un second support mobile ajouré formant moyen 8 de collecte dont les orifices 8a plus petits que ceux du support 3 ont une dimension et une forme adaptées au type de viande à convoyer.

Le fluide liquide, en général de l'eau, qui est projeté depuis les organes 5 de projection, s'écoule avec la viande à travers le support 3 par les orifices 4, puis ensuite au travers des orifices 8a pour enfin être récupéré dans le bac 10 de récupération de fluide. La viande, quant à elle, est acheminée par le second convoyeur formant moyens 8 de collecte vers le bac de récupération 9 de la viande ou vers une unité 11 de pressage.

Le fluide liquide récupéré peut de manière économique être recyclé en tout ou partie par l'unité 14 de traitement, permettant son nettoyage par élimination des impuretés constituées de solides et/ou de graisses, son refroidissement ou son réchauffage et son renvoi sous pression vers les buses 5 afin de pouvoir fonctionner en circuit fermé.

La viande récupérée peut faire l'objet de traitements complémentaires permettant de diminuer sa teneur en eau ou en graisse (par exemple par pressage ou centrifugation), et/ou d'améliorer sa conservation (par exemple, par addition de conservateurs ou par mise sous vide ou par surgélation ou par traitement thermique), et/ou de modifier ses caractéristiques organoleptiques (par exemple par addition de sel, arômes et autres ingrédients alimentaires), et/ou tout autre traitement permettant de faciliter l'utilisation des viandes obtenues par le procédé de l'invention.

Comme mentionné ci-dessus, le procédé de l'invention peut comprendre plusieurs installations successives telles que celles décrites précédemment dans lesquelles on applique une pression différente adaptée à la nature et/ou à la taille des morceaux de chair cuite. De telles installations peuvent être disposées en série les unes après les autres, et peuvent traiter successivement des morceaux de chair partiellement traités dans une installation précédente de manière à enlever progressivement les os et/ou le cartilage.

La cuisson appliquée préalablement aux morceaux de chair à séparer selon le procédé de l'invention peut comprendre tous les modes de cuisson applicables sur des morceaux de viande. La séparation s'opère immédiatement après cuisson c'est-à-dire sur les produits cuits encore chauds sans leur laisser le temps de se refroidir pour limiter les dépenses en énergie.

Parmi ces modes de cuisson préalables, on peut trouver le confisage de la viande dans de la graisse et/ou dans de l'huile végétale, la cuisson au bouillon dans de l'eau, la cuisson aux micro-ondes avec ou sans ajout d'un quelconque liquide additif, la cuisson à la vapeur avec un fluide quelconque, ou encore la cuisson dans un four classique.

Les exemples qui suivent et qui sont donnés uniquement à titre d'illustration présentent différentes manières de traiter les morceaux de chair avec os selon le procédé de l'invention.

### . Exemple 1 (chair de boeuf) :

Le premier exemple de réalisation concerne le traitement de vertèbres de boeuf avec chairs attenantes issues d'un désossage rapide du collier et du train de côtes. La mise en oeuvre du procédé s'effectue dans ce cas telle que suit :
- cuisson des vertèbres avec chair dans la vapeur sous pression à 115 °C pendant 2 h 30 ;
- traitement de séparation avec de l'eau chaude à 75°C pulvérisée sous une pression comprise entre 50 et 60 bars ;
- récupération des viandes et surgélation en blocs.

### . Exemple 2 (chair de porc) :

Le second exemple de réalisation décrit l'application du procédé à des ensembles « vertèbres + côtes » issus du désossage des longes de porc. L'application du procédé est réalisée dans ce cas de la façon suivante :
- cuisson des longes de porc avec chair dans l'eau bouillante à 100 °C pendant 2 h 30 ;
- traitement de séparation avec le bouillon de cuisson à 80 °C pulvérisé sous une pression comprise entre 40 et 50 bars ;
- récupération des viandes, addition de sel et de conservateurs et conditionnement sous vide pour une conservation en frais.

### . Exemple 3 (chair de volaille) :

Le troisième exemple illustre l'utilisation du procédé pour traiter les ailerons de poulet ou de dinde issus de la découpe des carcasses. Dans ce cas, le procédé est mis en oeuvre dans les conditions suivantes :
- cuisson des ailerons dans le saindoux pendant 1 h 30 à 85 °C ;
- traitement de séparation en deux temps avec de l'eau chaude à 70 °C pulvérisée sous une pression comprise entre 20 et 30 bars à la première étape puis entre 50 et 60 bars au stade final ;
- entre les deux étapes de séparation, récupération des morceaux grossiers avec l'aide d'une brosse métallique rotative permettant de piquer ces morceaux, de les extraire et de les récupérer sur un tapis supérieur ;
- récupération des viandes en morceaux et surgélation IQF ;
- récupération des fibres de viandes (fines particules) et surgélation en blocs.

### . Exemple 4 (chair de canard) :

Le quatrième exemple présente l'application du procédé pour désosser des cous de canard confits. La mise en oeuvre du procédé s'effectue cette fois-ci selon le protocole opératoire ci-après :
- confisage des cous de canard dans la graisse de canard à 95 °C pendant 1 h 40;
- traitement de séparation avec de l'eau chaude à 70 °C pulvérisée sous une pression comprise entre 30 et 40 bars ;
- pressage des viandes pour ramener leur humidité aux alentours de 70 %;
- récupération des viandes, conditionnement sous vide et pasteurisation.

### . Exemple 5 (chair de poisson) :

Le cinquième exemple de réalisation porte sur le traitement des arêtes de poisson avec chairs attenantes issues d'un filetage mécanisé. L'application du procédé est effectuée dans ce cas telle que décrit ci-après :
- cuisson des arêtes avec chair dans la vapeur à 100 °C pendant 30 minutes ;
- traitement de séparation avec de l'eau chaude à 60°C pulvérisée sous une pression comprise entre 10 et 20 bars ;
- récupération des chairs, salage et aromatisation puis surgélation en blocs.

## Revendications

1. Procédé de séparation de morceaux de chair d'animaux marins ou terrestres comportant des os et/ou du cartilage,
**caractérisé en ce qu'**il comprend, une étape de cuisson des morceaux de chair d'animaux marins ou terrestres, suivie immédiatement d'au moins un traitement physique consistant à projeter, généralement par pulvérisation, au moins un fluide, sous pression, sur les morceaux de chair cuite de façon à séparer la chair des os ou du cartilage, la température du fluide du traitement étant au moins égale à 50° C.

2. Procédé selon la revendication 1,
**caractérisé en ce que** la pression du fluide du traitement physique est comprise entre 4 et 100 bars, de préférence comprise entre 6 et 50 bars.

3. Procédé selon l'une des revendications 1,
**caractérisé en ce que** la température du fluide du traitement physique est comprise entre 60° et 80° C.

4. Procédé selon l'une des revendications 1 à 3,
**caractérisé en ce que** le fluide est choisi parmi des liquides tels que l'eau, des liquides aqueux, des huiles végétales, des graisses animales et leurs mélanges.

5. Procédé selon l'une des revendications 1 à 4,
carctérisé en ce qu'il consiste, pour l'optimisation du traitement physique, à disposer les morceaux de chair cuite à la surface d'un support (3) ajouré (4) et à orienter le flux de fluide projeté vers la surface dudit support (3), suivant une direction de préférence sensiblement orthogonale audit support (3), de manière telle que le flux de fluide provoque à la fois le détachement de la chair des os ou du cartilage et l'entraînement de la chair à travers les ajours dudit support (3).

6. Installation de séparation de morceaux de chair cuite d'animaux marins ou terrestres comportant des os et/ou du cartilage destinée à mettre en oeuvre le procédé selon l'une des revendications 1 à 5,
**caractérisée en ce qu'**elle comprend, disposés immédiatement en aval, de moyens de cuisson desdits morceaux de chair à séparer, au moins :
- un support (3), généralement plan, ajouré (4) de réception des morceaux de chair cuite à traiter,
- des organes (5), tels que buses, de projection d'un fluide liquide en direction dudit support,
- des moyens (8) de collecte positionnés sous ledit support (3), ces moyens étant aptes à récupérer la chair, séparée d'avec les os et/ou le cartilage sous l'action du fluide, et forcée à traverser ledit support (3) sous l'action de ce même fluide.

7. Installation selon la revendication 6,
**caractérisée en ce qu'**elle comporte en outre des moyens (10) de récupération du fluide liquide de désossage généralement chargé en graisse, ces moyens de récupération étant positionnés sous les moyens (8) de collecte de la chair.

8. Installation selon la revendication 7,
**caractérisée en ce qu'**elle comporte en outre une unité (14) de traitement du fluide liquide de désossage reliée en entrée aux moyens (10) de récupération du fluide de désossage et raccordée en sortie aux organes (5), tels que buses, de projection du fluide liquide en vue de permettre un recyclage du fluide liquide de désossage.

9. Installation selon la revendication 7,
**caractérisée en ce qu'**il est prévu, sur le circuit de circulation de fluide, entre moyens (10) de récupération du fluide liquide de désossage et organes (5) de projection de fluide liquide, des moyens (13) de pompage du fluide liquide et des moyens (15) de chauffage dudit fluide liquide.

10. Installation selon l'une des revendications 6 à 9,
**caractérisée en ce que** le support (3) de réception des morceaux de chair cuite à traiter est un support (3) mobile ajouré (4), tel qu'un tapis convoyeur, équipé d'orifices de séparation de la chair des os ou cartilages, ce support (3) décrivant une trajectoire prédéterminée entre une zone d'alimentation (2) en morceaux du support (3) et une zone d'évacuation des os ou cartilages, ladite zone d'évacuation étant pourvue d'un bac (10) de récupération des os et cartilages.

11. Installation selon l'une des revendications 6 à 10,
**caractérisée en ce que** les moyens (8) de collecte de la chair se présentent sous forme d'une surface ajourée mobile le long d'une trajectoire prédéterminée, ces moyens (8) de collecte pouvant être disposés en série avec une unité (11) de pressage dans laquelle la chair désossée, issue des moyens (8) de collecte, est directement évacuée.

12. Chair cuite d'animaux marins ou terrestres exempte d'os et/ou de cartilages, apte à constituer un produit intermédiaire ou fini,
**caractérisée en ce que** ladite chair est obtenue par mise en oeuvre d'un procédé conforme à l'une des revendications 1 à 5.
